# DEMANDE DE BREVET EUROPEEN

(11) **EP 3 031 617 A1**
(43) Date de publication de la demande: **15.06.2016**
(21) Numéro de dépôt: 15003349.6
(22) Date de dépôt: 24.11.2015
(51) Int. Cl.: B60B 21/02, B60B 21/10, B60B 21/06, B21D 53/30

(54) **JANTE POUR ROUE DE CYCLE ET SON PROCÉDÉ DE FABRICATION**

(30) Priorité: 26.11.2014 FR 1402679
(71) Demandeur: MAVIC S.A.S., 74370 Metz-Tessy (FR)
(72) Inventeur: Mercat, Jean-Pierre, 74650 Chavanod (FR); Neyroud, Christophe, 74960 Cran-Gevrier (FR)
(74) Mandataire: Rambaud, Pascal

(57) **Abrégé**

Cette jante (3) pour roue de cycle est adaptée pour recevoir un pneumatique ouvert. La jante présentant en coupe radiale une forme en « U » avec deux parois latérales (33A, 33B) situées de part et d'autre d'un plan médian (M) de la Jante, et un pont inférieur (38) qui relie les parois latérales. Un pont supérieur (31) relie les parois latérales pour former un contour fermé. Le pont supérieur (31) comportant une zone médiane (Z31) s'étendant de part et d'autre du plan médian (M). Dans la zone médiane et sur une portion circonférentielle de la jante supérieure ou égale à 50% de sa circonférence, une épaisseur amincie (E31, E36) du pont supérieur (31) est inférieure à 0.75 mm, de préférence inférieure à 0.65 mm.

## Description

La présente invention concerne une jante pour roue de cycle, ainsi qu'un procédé de fabrication d'une telle jante.

De manière classique, une jante pour roue de cycle est de forme annulaire et présente une section radiale en forme de U, avec deux ailes latérales qui sont globalement perpendiculaires à l'axe de rotation de la roue, et un pont reliant les ailes latérales qui est tourné en regard de l'axe de rotation de la roue. Dans le cas d'une roue à rayons, les rayons sont généralement fixés autour de la jante.

Depuis le début du vingtième siècle, on utilise des roues de cycle qui sont équipées de pneumatiques gonflés à l'air. Il existe deux familles de pneumatiques pour vélo : les pneumatiques tubulaires, appelés couramment « boyaux », et les pneumatiques à tringles ou « pneus » dits a pneus ouverts ».

EP-A-0 893 280 divulgue une jante du type crochet qui est prévue pour un montage dit « tubeless », c'est-à-dire avec un pneumatique à tringle sans chambre à air. Les ailes latérales du profil de la jante présentent, dans leur partie supérieure, un rebord en crosse ou à crochet ayant pour fonction de retenir les tringles du pneumatique, qui sont non extensibles.

De manière classique, parmi les tringles non extensibles, on distingue les tringles rigides, qui sont par exemple en acier, et les tringles souples, par exemple en kevlar qui permettent le pliage du pneumatique pour faciliter son transport.

Une jante prévue pour recevoir un pneumatique à tringle non extensible est soumise à des efforts de pression résultant du gonflage du pneumatique. Par exemple, pour un gonflage de 10 bars, les composantes de ces efforts parallèlement à l'axe de la roue sont très importantes, typiquement de l'ordre de 28 kN. Une résistance mécanique minimale est imposée par le fait que les ailes latérales et les crochets sont directement soumis à ces forces de pression. Par conséquent, dans le cas d'une jante métallique, la structure de la partie haute de la jante, à savoir les crochets, les ailes latérales et le pont supérieur, doivent avoir une épaisseur de parois relativement importante pour résister aux sollicitations mécaniques générées par la pression du pneumatique.

Par ailleurs, pour permettre le montage du pneumatique par passage des tringles par-dessus les crochets, il est nécessaire de donner à la partie haute du profil de la jante une géométrie particulière. En effet, pour pouvoir faire passer la tringle par-dessus le crochet en un point de la jante, il est nécessaire que, au point diamétralement opposé, l'ensemble formé par les crochets et le pont supérieur ait une forme en creux dont la profondeur soit suffisamment importante.

Pour permettre un montage aisé d'un grand nombre de pneumatiques sur un grand nombre de jantes, l'organisation technique européenne des pneus et des jantes (ETRTO : European Tire and Rime Technical Organisation) a proposé une norme qui impose une profondeur minimale de 7,7 mm pour la partie haute du profil de jante. Plus la profondeur, et notamment plus les alles latérales, sont hautes et plus les ailes latérales et le pont supérieur doivent être résistants puisque les ailes sont en porte-à-faux par rapport au pont supérieur et donc soumises à des contraintes combinées de flexion et de traction.

En outre, pour fabriquer de jantes métalliques de manière simple et relativement économique, il est connu d'employer un procédé par extrusion, pour obtenir un profil rectiligne qui est ensuite cintré pour donner la forme circulaire de la jante. Dans ce procédé, l'épaisseur minimale des parois de la jante est limitée par le procédé d'extrusion, qui nécessite une épaisseur d'au moins 0,8 mm dans le cas d'un alliage métallique relativement résistant. De plus, lors du cintrage, les parois de la jante doivent être suffisamment épaisses pour ne pas se déformer. Enfin, pour souder bout à bout les extrémités du profilé, il est nécessaire de prévoir une épaisseur minimale d'environ 0,8 à 0,9 mm.

Pour alléger les jantes sans engendrer de défauts de fabrication, il est connu d'enlever de la matière après cintrage et assemblage des extrémités de l'ébauche de la jante. EP-A-715 001 propose d'enlever de la matière par attaque chimique. En variante, EP-A-1 084 868 propose d'enlever de la matière par usinage mécanique. Ces solutions consistent à diminuer l'épaisseur uniquement au niveau du pont inférieur et/ou des ailes latérales de la jante, notamment au niveau des zones séparant deux rayons consécutifs. Par conséquent, l'allègement de la jante est limité. Par ailleurs, dans le cas de l'attaque chimique, l'enlèvement de matière est réalisé de manière homogène sur toutes les parois de la jante, et affecte donc dans les mêmes proportions toutes les zones de la jante, en particulier les zones soumises à des fortes contraintes mécaniques. Ainsi, il est nécessaire de prévoir une ébauche de jante ayant un pont supérieur et des ailes latérales épais, pour que ces parties restent suffisamment résistantes après l'attaque chimique. L'attaque chimique présente en outre plusieurs inconvénients, elle affaiblit la tenue à la fatigue du matériau car elle génère un aspect peau d'orange en créant des discontinuités aux joints de grains et l'attaque engendre des boues d'alumine couteuses à retraiter.

La présente invention propose une nouvelle jante métallique allégée permettant de remédier à ces inconvénients.

A cet effet, l'invention a pour objet une jante pour roue de cycle adaptée pour recevoir un pneumatique ouvert, la jante présentant en coupe radiale une forme en « U » avec: deux parois latérales situées de part et d'autre d'un plan médian de la jante, et un pont supérieur reliant les parois latérales pour former un contour fermé, le pont supérieur comportant une zone médiane s'étendant de part et d'autre du plan médian, caractérisée en ce que dans la zone médiane et sur une portion circonférentielle de la jante supérieure ou égale à 50% de sa circonférence, une épaisseur amincie du pont supérieur est inférieure à 0.75 mm, de préférence inférieure à 0.65 mm.

Grâce à l'invention, l'épaisseur de la zone médiane du pont supérieur est réduite de manière prononcée, ce qui permet d'alléger davantage la jante par rapport aux jantes connues.

Selon des aspects avantageux mais non obligatoires de l'invention, une telle jante peut incorporer une ou plusieurs des caractéristiques suivantes, prises dans toute combinaison techniquement admissible :
- une largeur de la zone médiane du pont supérieur est supérieure à 10 mm, de préférence supérieure à 16 mm ;
- la jante comporte deux gouttières situées de part et d'autre du plan médian et aptes à recevoir un talon du pneumatique et en ce qu'une profondeur maximale des gouttières est inférieure à 7 mm, de préférence inférieure à 5 mm, notamment de l'ordre de 3,5 mm ;
- les parois latérales sont prolongées à l'opposé du pont inférieur par des ailes latérales qui délimitent chacune un côté d'une gouttière de réception d'un talon du pneumatique et en ce qu'une hauteur des ailes latérales, mesurée parallèlement au plan médian, est inférieure à 5 mm, de préférence inférieure à 3,6 ;
- la jante est fabriquée à partir d'un alliage d'aluminium comportant au moins 0,6% de Magnésium et 0,6% de Silicium ;
- l'épaisseur du pont supérieur n'est pas amincie au moins au niveau de zones d'attache de rayons, situées respectivement autour de trous où sont montés les rayons et en ce qu'une longueur de chaque zone d'attache, mesurée le long de la circonférence de la jante, est comprise entre 10 et 30 mm, de préférence comprise entre 14 et 20 mm ;
- le diamètre de la jante est supérieur ou égal à 550 mm, de préférence supérieur ou égal à 620 mm.

Un autre aspect de l'invention concerne un procédé de fabrication qui comprend les étapes suivantes:
- une étape d'extrusion, dans laquelle on réalise par extrusion ou filage d'un alliage métallique un profilé rectiligne ;
- une étape de cintrage, dans laquelle on cintre le profilé pour former au moins une spire hélicoïdale ;
- une étape optionnelle de découpe, dans laquelle on sectionne les spires pour obtenir des anneaux ;
- une étape d'assemblage, dans laquelle on met bout à bout les extrémités de l'anneau pour les solidariser ;
- une étape d'amincissement, dans laquelle on enlève de la matière au pont supérieur sur toute la zone médiane, afin de conférer au pont supérieur son épaisseur amincie.

Avantageusement, l'étape d'amincissement, est une opération de fraisage et la matière est enlevée en une seule passe.

L'invention sera mieux comprise et d'autres avantages de celle-ci apparaitront plus clairement à la lumière de la description qui va suivre d'une jante conforme à l'invention, donnée uniquement à titre d'exemple et faite en référence aux dessins annexés dans lesquels :
- la figure 1 est une vue latérale d'une roue conforme à l'invention, comprenant une jante et un pneumatique ;

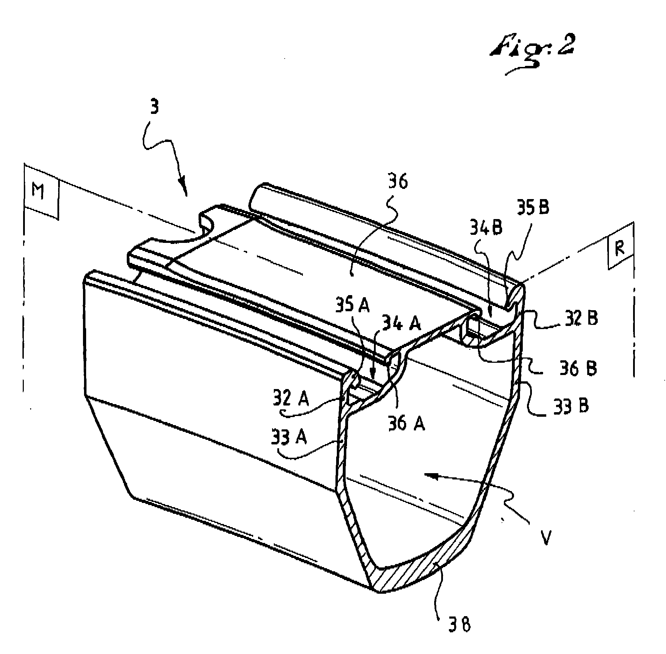

- la figure 2 est une vue en perspective d'un tronçon de la jante de la figure 1 ;
- la figure 3 est une coupe selon le plan R à la figure 1 ;
- la figure 4 est une vue semblable à la figure 3 d'une ébauche de la jante en cours de fabrication ;
- la figure 5 est une coupe selon le plan M à la figure 4 ;
- la figure 6 est une coupe analogue à la figure 3 de la jante en cours de fabrication ;
- la figure 7 est une coupe analogue à la figure 3 d'une jante conforme à un deuxième mode de réalisation de l'invention ;
- la figure 8 est une coupe selon le plan M à la figure 7 ;
- la figure 9 est une coupe analogue à la figure 3 d'une ébauche de la jante conforme à un troisième de réalisation de l'invention.
- la figure 10 est une vue en coupe d'une roue selon un quatrième mode de réalisation de l'invention.

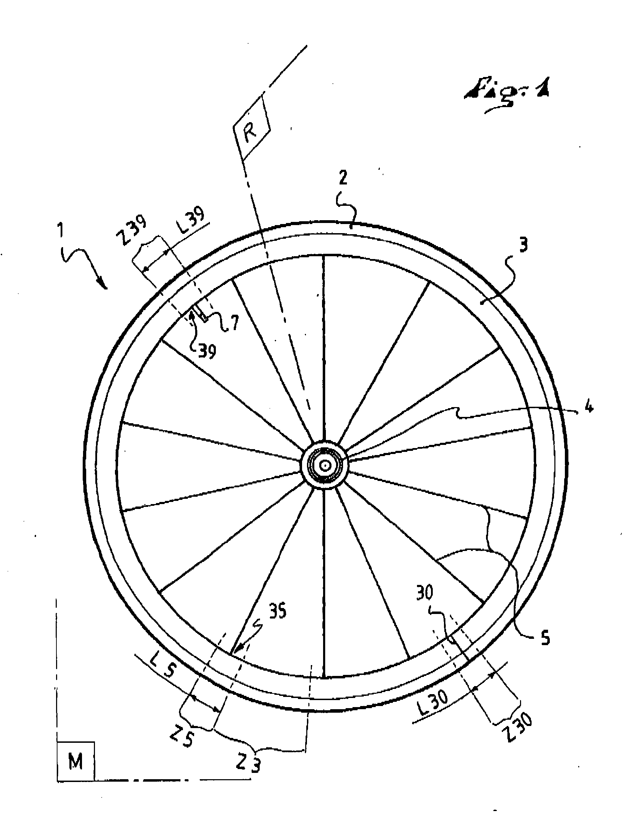

La figure 1 montre une roue 1 qui comprend un pneumatique 2 et une jante 3, ainsi qu'un moyeu 4 et des rayons 5. L'invention ne se limite pas aux roues équipées de rayons tendus et inclut également par exemple les roues à bâtons ou lenticulaires.

La roue 1 est une roue pour cycle. A la différence notamment des roues pour automobile, les roues pour cycle se caractérisent par une plus grande légèreté et par une pression de gonflage du pneumatique pouvant être beaucoup plus importante. En effet, la masse d'une roue de cycle dépasse rarement quelques kg, elle est en général comprise entre 1 et 4 kg, tandis qu'une roue pour automobile a une masse minimale d'environ 10 à 15 kgs.

L'invention s'applique particulièrement au domaine des roues de vélo pour la compétition, et notamment pour la compétition sur route. Dans ce cadre, la masse d'une roue complète est inférieure à 2 kg ou à 1 kg pour les plus performantes, et les pressions de gonflage peuvent atteindre 10 bars. L'invention concerne principalement les roues de vélo de course, c'est-à-dire des roues de vélo dont le diamètre normalisé de jante est de 622 mm, éventuellement de 584 mm ou de 559 mm. De telles roues sont caractérisées par une très bonne rigidité et un poids minimal, avec notamment une jante dont le poids est inférieur à 700 g, de préférence inférieur à 500 g.

La jante 3 a la forme d'un tore fermé d'axe A, qui est l'axe de rotation de la roue 1. Ce tore est symétrique par rapport à un plan médian M qui coupe la jante 3 en deux demi-tores circulaires. En section radiale, ce tore a la forme d'un caisson creux délimité par un pont inférieur 38, un pont supérieur 31, et deux parois latérales 33A et 33B.

Au-dessus de ce tore est ménagée une zone d'interface avec le pneumatique 2. Cette zone d'interface comprend deux ailes latérales 32A et 32B qui prolongent les parois latérales 33A et 33B à l'opposé du pont inférieur 38, et un pavé central 36 constitué par la portion centrale du pont supérieur 31, qui fait saillie vers le haut par rapport aux portions latérales du pont supérieur 31.

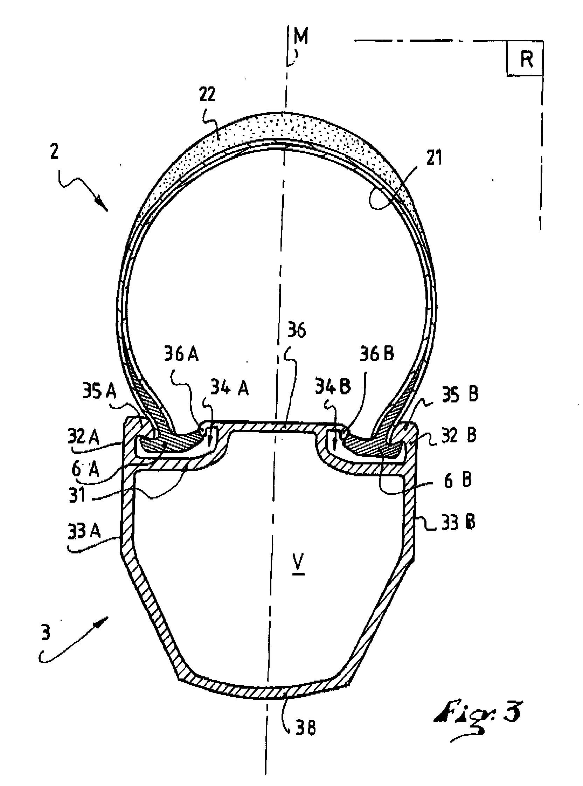

Dans la description qui suit, les notions d'orientation « vers le haut » et « vers le bas » font référence à la section radiale de la roue représentée à la figure 3. Par conséquent, « vers le haut» indique une direction radiale qui s'éloigne de l'axe A de la roue 1, tandis que « vers le bas » indique une direction radiale qui s'en rapproche. De la même manière, l'orientation « vers l'intérieur » et le terme « médial » correspondent à une direction axiale qui se rapproche du plan médian M, alors que « vers l'extérieur » et « latéral » correspondent à une direction axiale qui s'éloigne du plan médian M. Par direction axiale, on entend une direction parallèle à l'axe A.

Une section radiale est selon un plan, tel que le plan R, qui est perpendiculaire à l'axe A en passant par cet axe.

En coupe radiale, la jante 3 présente une forme en « U » avec deux branches globalement parallèles définies par les deux parois latérales 33A et 33B, et le pont inférieur 38 qui relie les parois latérales. Le pont inférieur 38 est situé du côté de l'axe de rotation A de la roue 1 par rapport au pont supérieur 31. Le pont supérieur 31 relie les extrémités supérieures des parois latérales 33A et 33B pour former une section fermée en forme de caisson, délimitant un volume interne V.

Une gouttière gauche 34A est définie entre le pavé 36 et l'aile latérale gauche 32A. De manière symétrique par rapport au plan médian M, une gouttière droite 34B est définie entre le pavé 36 et l'aile latérale droite 32B.

Chaque gouttière 34A et 34B constitue un volume torique semi-fermé. Pour la gouttière gauche 34A, ce volume est délimité à gauche par la face interne de l'aile gauche 32A, en bas par le dessus de la portion latérale gauche du pont supérieur 31 et à droite par le pavé 36. Ce volume est ouvert vers le haut. Le pavé 36 se termine dans sa partie gauche par un butoir 36A délimitant l'extrémité droite de la gouttière 36A.

L'aile gauche 32A se prolonge par un crochet 35A qui est orienté vers le bas et vers l'intérieur. L'aile gauche 32A, qui s'étend vers le haut depuis la jonction entre la paroi latérale gauche 33A et le pont supérieur 31, réalise un coude vers le bas pour former le crochet 35A.

L'ouverture supérieure de la gouttière gauche 34A est réalisée par le haut entre le crochet 35A et le butoir 36A.

De manière analogue, la gouttière droite 34B est délimitée à droite par la face interne de l'aile droite 32B, en bas par le dessus de la portion latérale droite du pont supérieur 31 et à gauche par un butoir 36B du pavé 36.

Une hauteur H des ailes latérales 32A, 32B, mesurée parallèlement au plan médian M, est inférieure à 5 mm, de préférence inférieure à 3,6 mm.

Une surface externe S31 du pont supérieur 31 est tournée à l'opposé de l'axe de rotation A de la roue 1, et elle est située à l'extérieur du volume interne de la jante 3. La surface externe S31 comprend une partie médiane S36, à savoir la surface externe du pavé 36, ainsi que deux parties latérales S31A et S31B, à savoir les surfaces externes des parties latérales 31A et 31B du pont supérieur 31.

On note P, la profondeur maximale de la zone d'interface qui correspond à la différence d'élévation entre le sommet des ailes latérales et le point le plus bas du pont supérieur. Dans le premier mode de réalisation de l'invention, la profondeur maximale P correspond à la différence d'élévation entre le fond de la gouttière 34A ou 34B et le sommet de l'aile latérale 32A ou 32B correspondante. La profondeur P est mesurée radialement dans un plan de coupe radial R de la jante 3, entre le sommet du crochet 35A ou 35B et la surface externe latérale S31A ou S31B de la partie latérale gauche 31A ou droite 31B correspondante du pont supérieur 31. La profondeur P de la gouttière 34A est égale à celle de la gouttière 34B.

La profondeur P est inférieure à 7 mm, de préférence inférieure à 5 mm, notamment de l'ordre de 3.5 mm.

Le pneumatique 2 a la forme d'un tore ouvert, il comprend une enveloppe souple 21 et deux talons 6A et 6B. L'enveloppe 21 est surmontée par une bande de roulement 22. Dans le mode de réalisation décrit ici, l'enveloppe 21 et la bande de roulement 22 sont des pièces différentes cousues et/ou collées l'une à l'autre. En variante, il est possible de réaliser ces éléments en une seule pièce. Chaque talon 6A et 6B est retenu dans la gouttière 34A ou 34B et il est prévu pour venir en contact avec le crochet 35A ou 35B correspondant, ainsi qu'avec le butoir 36A ou 36B.

La jante 3 comporte un trou de valve 39 qui traverse le pont supérieur 31 et le pont inférieur 38 et qui autorise le passage d'une valve 7 de gonflage. L'invention s'applique indistinctement aux jantes prévues pour un montage de pneu classique avec chambre à air ainsi qu'aux jantes « tubeless » qui sont prévues pour un pneumatique 2 qui s'utilise sans chambre à air.

La jante 3 comporte une jointure 30 qui relie les deux extrémités du profilé formant la jante 3. Il peut s'agir par exemple d'une soudure ou d'un assemblage à l'aide d'un manchon logé dans le volume intérieur V de la jante 3.

La jante 3 est divisée en plusieurs zones qui fractionnent sa circonférence en secteurs angulaires. La jante 3 comporte ainsi des premières zones Z5 d'attache des rayons 5, situées respectivement autour de trous 35 où sont montés les rayons 5. Deux zones intermédiaires Z3 sont situées de part et d'autre de chaque zone d'attache Z5.

Une longueur L5 de chaque première zone Z5, mesurée le long de la circonférence de la jante 3, à l'extérieur, est comprise entre 5 mm et 30 mm, de préférence comprise entre 10 mm et 20 mm Une troisième zone Z39 s'étend autour du trou de valve 39. Une longueur L39 de la troisième zone Z39, mesurée le long de la circonférence de la jante 3, est comprise entre 8 et 30 mm, de préférence comprise entre 15 et 22 mm.

Une quatrième zone Z30 s'étend autour de la jonction 30. Une longueur L30 de la deuxième zone Z30, mesurée le long de la circonférence de la jante 3, à l'extérieur, est comprise entre 4 et 35 mm, de préférence comprise entre 12 et 20 mm.

La suite de la description concerne un procédé de fabrication de la jante 3.

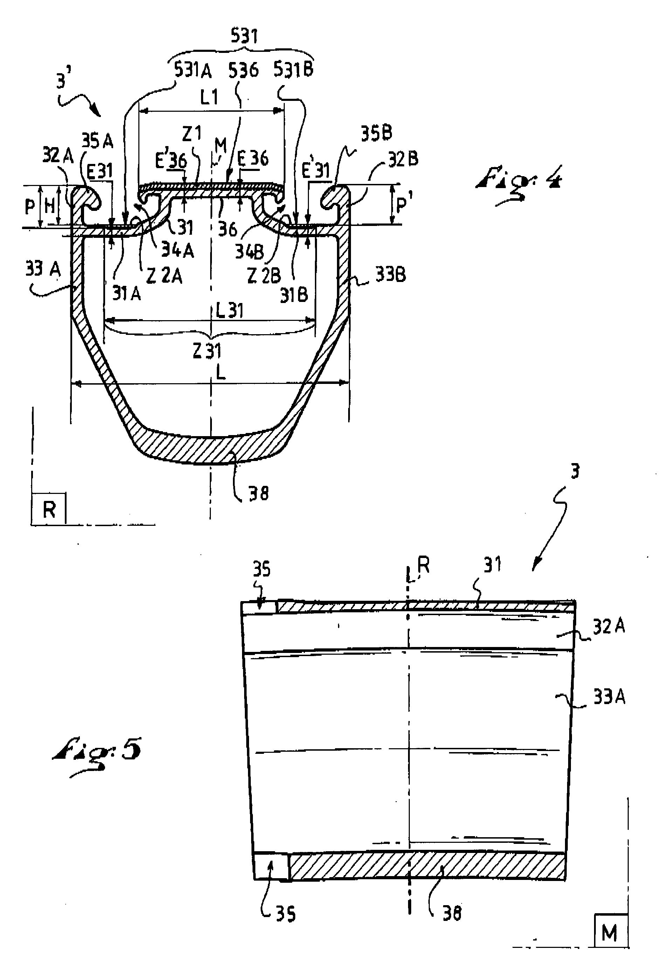

Dans une étape d'extrusion, on réalise par extrusion ou filage d'un alliage métallique, par exemple un alliage d'aluminium allié avec au moins 0,6% de magnésium et 0,6% de silicium, un profilé rectiligne 3', dont la section radiale est montrée à la figure 4. Sur cette figure, les zones hachurées Z1, Z2A et Z2B font partie du profilé 3'. La section radiale du profilé 3' est globalement similaire à celle de la jante 3, de sorte qu'on ne décrit pas à nouveau toutes ses parties.

On note E'36 une épaisseur du pavé 36 du profilé 3', mesurée selon une direction radiale dans le plan médian M, perpendiculairement à l'axe longitudinal du profilé 3', L'épaisseur E'36 est comprise entre 0,8 et 2,5 mm, de préférence comprise entre 1,2 et 2 mm.

On note E'31 une épaisseur des parties latérales gauche 31A et droite 31B du pont supérieur 31 du profilé 3'. L'épaisseur E'31 est comprise entre 0,7 et 1,4 mm, de préférence comprise entre 0,8 et 1,1 mm.

Dans une étape de cintrage, on cintre le profilé 3' pour former au moins une spire hélicoïdale, par exemple au moyen d'une cintreuse à galets. Par exemple, on forme trois spires à partir du profilé 3', qui a alors une longueur totale qui équivaut à environ trois fois la circonférence de la jante 3.

Pour éviter l'apparition de défauts dans la matière du profilé 3' lors de l'extrusion, l'épaisseur des parois du profilé 3' doit être suffisamment importante. De plus, lors du cintrage, si les parois du profilé 3' sont trop fines, Il risque de flamber et des plissements indésirables risquent de se former.

Dans une étape de découpe, on sectionne les spires pour obtenir plusieurs anneaux ayant sensiblement le même périmètre que la jante 3.

Dans une étape d'assemblage, on met bout à bout les extrémités de l'anneau obtenu lors de l'étape de découpe pour les solidariser, par exemple en les soudant au niveau de la jointure 30.

L'épaisseur du profilé 3', en particulier les épaisseurs E'31 et '36, sont suffisamment élevées pour réaliser une soudure ayant une bonne solidité. En effet, lorsque l'épaisseur est trop faible, la soudure devient très délicate à réaliser et risque de se rompre, de plus pour les utilisations en mode Tubeless il est très délicat de réaliser une jante soudée étanche ayant une faible épaisseur de paroi.

Dans une étape de perçage, on réalise le trou de valve 39 par exemple au moyen d'un forêt.

Lors d'une étape d'amincissement, on usine une zone Z31 de la surface externe S31 du pont supérieur 31. La zone Z31 s'étend de part et d'autre du plan médian M en étant coupée par ce plan. La zone Z31 est centrée sur le plan médian M selon une direction axiale. Une largeur L31 de la zone médiane Z31 du pont supérieur 31, mesurée parallèlement à l'axe A, est supérieure à 10 mm, de préférence supérieure à 16 mm.

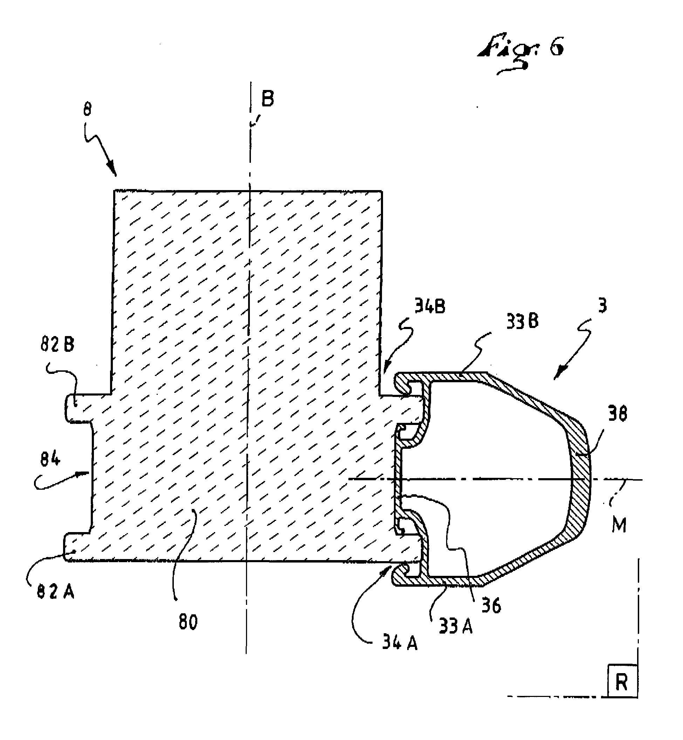

A titre d'exemple, comme représenté à la figure 6, la zone Z31 est usinée au moyen d'une fraise 8 qui comprend un corps 80 de forme cylindrique centré sur un axe de rotation B de la fraise 8. Le corps 80 comporte une surface externe 84 de forme cylindrique et munie de dents, bordée de part et d'autre, le long de l'axe B, par une collerette 82A ou 82B en forme d'anneau, munie de dents. Ainsi, un renfoncement est défini entre les collerettes 82A et 82B, le long de la surface externe 84. La forme de la fraise 8 correspond à la géométrie du pont supérieur 31 et permet d'usiner simultanément toutes les parties S31A, S31B, S36 de la surface externe S31 de la zone amincie Z31. La surface externe 84 usine la surface médiane S36 tandis que les collerettes 82A et 82B usinent simultanément les parties latérales S31A et S31B.

Durant l'étape d'amincissement, la jante 3 est fixée en position horizontale sur un plateau mobile en rotation autour de l'axe de rotation (vertical) A de la jante. L'axe de rotation B de la fraise 8 est positionné verticalement, et un robot déplace la fraise 8 selon une direction radiale de la jante 3, avec une faible course correspondant à l'épaisseur de la matière usinée. Cela permet de simplifier l'étape d'amincissement et de réduire sa durée, par exemple à moins de 1 à 2 min. Ainsi, le coût de fabrication de la jante 3 ne se trouve pas trop affecté.

On note E36 une épaisseur maximale du pavé 36 et E31 une épaisseur maximale des parties latérales 31A et 31 B du pont supérieur 31, après l'étape d'amincissement. Dans l'exemple représenté sur les figures, l'épaisseur finale E31 de la partie latérale gauche 31A est égale à l'épaisseur finale E31 de la partie latérale droite 31B. En variante, l'épaisseur E31 de la partie latérale gauche 31A peut être différente de l'épaisseur E31 de la partie latérale droite 31 B.

Optionnellement, l'épaisseur finale E36 du pavé 36 est égale à l'épaisseur E31 des parties latérales 31A et 31B.

Les épaisseurs E36 et E31 sont strictement inférieures aux épaisseurs E'36 et E'31, respectivement.

Après l'étape d'amincissement, les épaisseurs finales E31 et E36 sont inférieures ou égales à 0.75 mm, de préférence inférieures à 0.65 mm. Dans le mode de réalisation décrit, l'épaisseur nominale est d'environ 0.6mm.

Dans un mode de réalisation on procède à une unique étape d'amincissement. Par étape « unique » d'amincissement, on entend qu'il n'y a pas d'étape d'amincissement supplémentaire pendant laquelle l'épaisseur de la zone Z31 est réduite. Bien entendu, cette opération d'usinage peut éventuellement être réalisée en 2 passes, une passe d'ébauche et une de finition.

Dans un autre mode de réalisation de l'invention, les zones Z5 ne sont pas usinées lors de l'étape d'amincissement. En d'autres termes, au niveau des zones Z5, les épaisseurs initiales E'31 et E'36 sont égales aux épaisseurs finales E31 et E36. En effet, au niveau des zones Z5 de fixation des rayons 5, la jante 3 est soumise à des contraintes mécaniques supérieures, dues à la sollicitation cyclique en traction et en compression imposée par les rayons 6. En conservant au niveau des zones Z5 une épaisseur suffisante, on évite les fissures de fatigue.

Au contraire, les zones Z3 situées entre les rayons 3 sont usinées lors de l'étape d'amincissement. Au niveau des zones Z3, la surface S31 du pont supérieur 31 est usinée. Les épaisseurs E31 et E36 sont donc inférieures aux épaisseurs E'31 et E'36, respectivement, au niveau ce ces zones Z3. Les contraintes mécaniques encaissées par la jante 3 au niveau des zones Z3 sont moins importantes qu'au niveau des zones Z5 de fixation des rayons 5. Par conséquent, la diminution des épaisseurs E31 et E36 n'impacte pas la solidité mécanique de la jante 3 de manière gênante.

De la même manière que les zones Z5 d'attache des rayons 5, la zone Z39 du trou de valve 39, ainsi que la zone de jonction Z30, ne sont pas usinées afin de conserver une résistance mécanique satisfaisante.

Dans une variante de réalisation, les zones Z5 et la zone Z39 sont moins usinées lors de l'étape d'amincissement que les zones Z3. Ainsi, comme dans le mode précédemment décrit, les épaisseurs E31 et E36 au niveau des zones Z5 et Z39 sont légèrement inférieures aux épaisseurs initiales E31' et E36' tout en étant supérieures aux épaisseurs existantes au niveau des zones Z3 de façon à conserver une résistance mécanique supérieure dans les zones Z5 et Z39.

L'étape d'amincissement est réalisée avec un procédé par enlèvement de matière, tel que le fraisage.

L'enlèvement de matière est réalisé sur une portion de la jante 3 supérieure ou égale à 50% de sa circonférence. Dans l'exemple décrit, la somme des longueurs L3 des zones Z3, mesurée le long de la circonférence de la jante 3, est supérieure à 50% de la circonférence totale de la jante 3. De préférence, l'enlèvement de matière est réalisé sur une portion de la jante 3 supérieure ou égale à 70% de sa circonférence.

Dans le cas d'une jante route de diamètre ETRTO de 633 mm et possédant 36 rayons appairés, c'est-à-dire fixés à la jante à proximité l'un de l'autre (ils partagent alors une zone d'ancrage commune et ne définissent pas, entre eux, une zone inter-rayon), on peut usiner les 18 espaces Z3 inter-rayons et ne pas usiner, ou usiner avec une profondeur inférieure les 18 zones Z5 où sont fixés les rayons. Dans ce cas, on obtient des résultats satisfaisants en donnant aux zones Z5, Z39 et Z30 une extension de 16 mm tandis que les zones Z3 une extension de 94 mm. On a alors un pourcentage supérieur à 80% du périmètre du pont supérieur qui est usiné.

Dans des modes de réalisation alternatifs, le pont supérieur 31 est usiné sur toute sa circonférence (100%), c'est-à-dire que les zones Z5, Z3, Z39 et Z30 sont usinées. Cependant on peut bien entendu régler la machine-outil de telle façon que l'épaisseur de la passe de coupe soit moins importante dans les zones où on veut garder une résistance mécanique satisfaisante. Ainsi les zones Z5, Z30 et/ou Z39 peuvent également être usinées jusqu'à obtenir une épaisseur du pont supérieur E31" et E36" qui soit respectivement supérieure à E31 et E36 mais inférieure à E31' et E36'.

La diminution des épaisseurs E31 et E36 permet d'alléger la jante 3. Par exemple, pour des épaisseurs finales E31 et E36 égales à 0,6 mm, le gain de masse est de l'ordre de 25 g.

L'enlèvement de matière au moyen de la fraise 8, tel que décrit plus haut, permet de faire varier la distance radiale entre la fraise 8 et l'axe de rotation A de la roue 1, en fonction des zones Z3, Z5, Z30 et Z39 de la jante 3. Cela permet d'usiner toutes les zones souhaitées en une seule passe, en faisant tourner la jante 3 autour de son axe A sur son support.

De manière connue en soi, une jante de l'art antérieur ne dispose pas à l'état gonflé d'une largeur strictement constante sur toute sa circonférence, compte tenu du trou de valve qui provoque un affaiblissement local de la jante, on note donc un élargissement local au droit du trou de valve. Par conséquent, le freinage au moyen de patins est irrégulier, l'usure de la jante est également irrégulière, et des vibrations sont générées. Grâce à l'invention, en enlevant de la matière entre les trous, la largeur de la jante 3 sous pression est rééquilibrée sur toute sa circonférence, ce qui supprime ces inconvénients,

De plus, il n'est pas rare d'observer des fissures générées par fatigue prenant naissance dans la zone de perçage du trou de valve de par les concentrations de contraintes induites par le trou, en augmentant localement cette épaisseur on peut ainsi prévenir cet endommagement sans alourdir la jante.

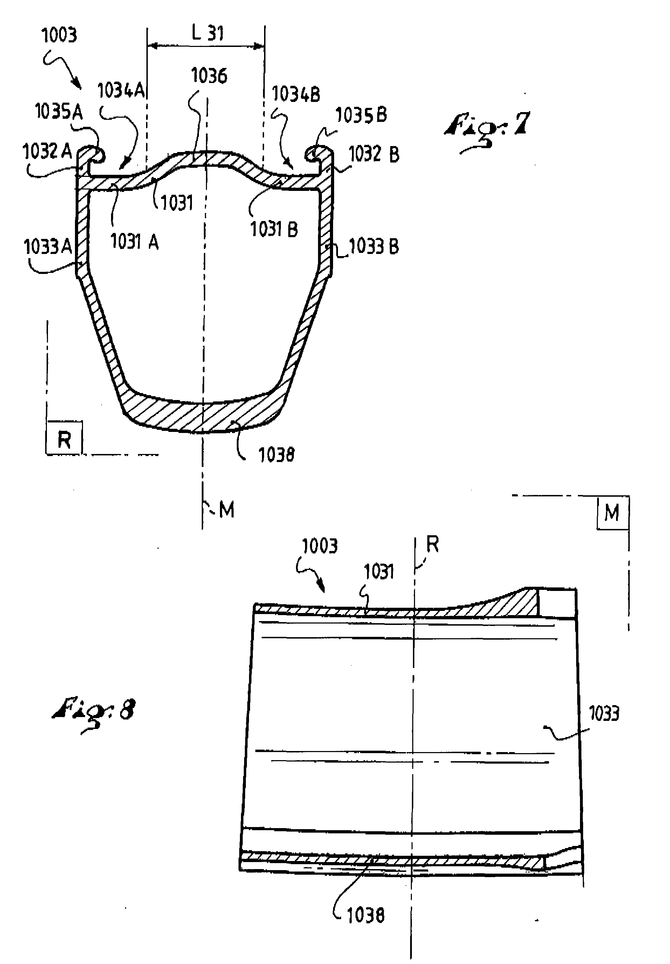

Les figures 7 et 8 montrent une jante 1003 conforme à un deuxième mode de réalisation de l'invention. Dans la suite, les éléments de la jante 1003 similaires à ceux de la jante 3 portent les mêmes références numériques, augmentées de 1000, et ne sont pas décrit en détail. Dans la suite, on décrit uniquement les éléments de la jante 1003 qui diffèrent de ceux de la jante 3.

Tout comme la jante 3, la jante 1003 comporte un pont inférieur 1038, un pont supérieur 1031 et deux parois latérales 1033A et 1033B qui délimitent ensemble un volume V de la jante 1003. Les parois latérales 1033A et 1033B sont prolongées vers le haut par des ailes latérales 1032A et 1032B terminées par des crochets 1035A et 1035B.

Le pont supérieur 1031 comporte une partie médiane 1036 et deux parties latérales 1031A et 1031B. La partie médiane 1036 est plus haute que les parties latérales 1031A et 1031 B, de manière à délimiter des gouttières 1034A et 1034B.

Le procédé de fabrication de la jante 1003 est similaire à celui décrit en référence à la jante 3. La géométrie de la fraise est adaptée à celle du pont supérieur 1031 de la jante 1003.

Comme dans le mode de réalisation précédent, la largeur L31 de la zone médiane qui est usinée est supérieure à 10 mm, de préférence 16 mm.

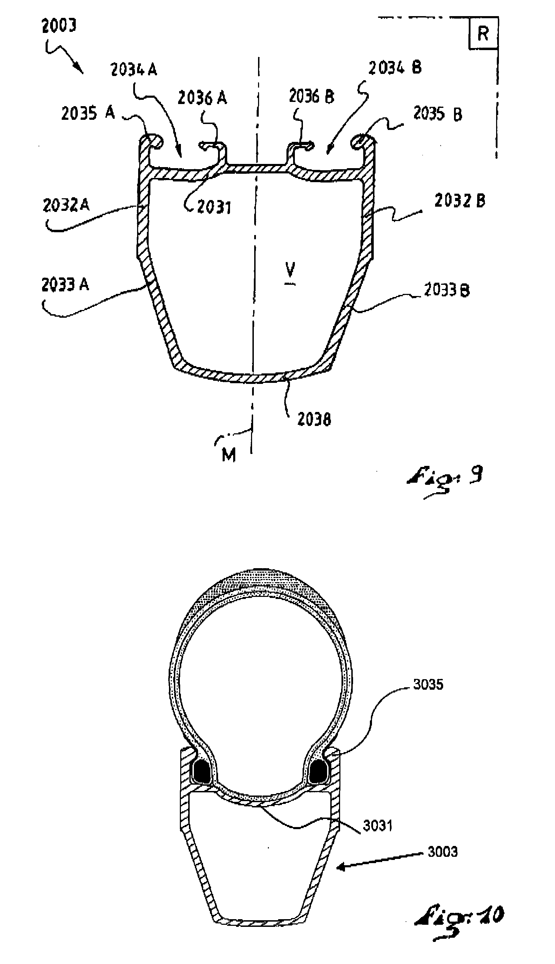

La figure 9 montre une jante 2003 conforme à un troisième mode de réalisation de l'invention. Dans la suite, les éléments de la jante 2003 similaires à ceux de la jante 3 portent les mêmes références numériques, augmentées de 2000, et ne sont pas décrit en détail. Dans la suite, on décrit uniquement les éléments de la jante 2003 qui diffèrent de ceux de la jante 3.

Tout comme la jante 3, la jante 2003 comporte un pont inférieur 2038, un pont supérieur 2031 et deux parois latérales 2033A et 2033B qui délimitent ensemble un volume V de la jante 2003. Les parois latérales 2033A et 2033B sont prolongées vers le haut par des ailes latérales 2032A et 2032B terminées par des crochets 2035A et 2035B.

Le pont supérieur 2031 comporte une partie médiane 2036 et deux parties latérales 2031A et 2031 B. La partie médiane 2036 comporte deux protubérances 2036A et 2036B terminées chacune par un butoir, de manière à délimiter des gouttières 2034A et 2034B.

Le procédé de fabrication de la jante 2003 est similaire à celui décrit en référence à la jante 3. La géométrie de la fraise est adaptée à celle du pont supérieur 2031 de la jante 2003. On peut notamment envisager d'usiner tout le pont 2031, y compris les bords verticaux des deux protubérances 2036A et 2036B situés près du plan médian dont on peut descendre l'épaisseur à environ 0,6 mm également.

Dans un mode de réalisation non représenté, la jante est constituée d'un profil en alliage d'aluminium complété par un carénage en matière composite comme on peut le voir dans la demande de brevet européen EP 2 311 650. Le pont inférieur de la jante est une paroi faite de matière composite qui est assemblée, par exemple par collage après la fabrication du cerceau en alliage d'alu. Dans ce cas on usinera le pont supérieur du cerceau avant la mise en place du carénage de matière composite.

La figure 10 montre une roue selon un quatrième mode de réalisation de l'invention. Cette roue comprend une jante 3003 dont le profil ne comporte pas deux gouttières comme dans les modes de réalisation précédents mais une unique gorge. Il est alors possible d'usiner toute la largeur du pont supérieur 3031, pour obtenir une épaisseur de celui-ci inférieure à 0,75 mm, de préférence inférieure à 0,65. On obtient ainsi, un gain de poids encore plus important. La profondeur de la gorge calculée entre le sommet des crochets 3035 et la partie centrale du pont supérieur est inférieure à 5,5 mm.

Dans une variante non représentée du quatrième mode de réalisation de l'invention, la profondeur de la gorge est plus importante, de manière, notamment, à être conforme aux recommandations de l'ETRTO en ce qui concerne la hauteur des crochets et du creux du fond de jante. Dans cette variante de réalisation, les ailes latérales et le pont supérieur définissent un profil creux dont la profondeur totale est supérieure à 7,7 mm. Compte-tenu de la profondeur du profil creux et des forces latérales importantes que peuvent exercer les talons du pneu sur les ailes, on pourra alors envisager de limiter la profondeur des passes d'usinage. Cependant, pour maintenir un gain de poids conséquent, c'est-à-dire pour réduire le plus possible l'épaisseur du pont supérieur, on pourra utiliser des matériaux encore plus résistants, comme par exemple utiliser des alliages d'aluminium comme les alliages 6053, 6069, 7108 ou encore 2196. Il s'agit d'une liste non limitative.

La présente invention ne se limite pas aux modes de réalisation représentés sur les figures. En outre, les caractéristiques et variantes des différents modes de réalisation peuvent être combinées entre elles, au moins partiellement, dans le cadre de l'invention.

L'invention s'applique également à une jante dont le pont supérieur serait percé pour permettre le passage des écrous de rayons dans ce cas il est encore plus recommandé de ne pas usiner ou de limiter l'usinage dans la zone Z30 comportant le trou de perçage du pont supérieur afin d'en limiter la déformation locale due au trou et de limiter les concentrations de contraintes liées au trou.

## Revendications

1. Jante (3 ; 1003 ; 2003) pour roue (1) de cycle adaptée pour recevoir un pneumatique ouvert (2), la jante présentant en coupe radiale une forme en « U » avec :
- deux parois latérales (33A, 33B ; 1033A, 1033B ; 2033A, 2033B) situées de part et d'autre d'un plan médian (M) de la jante, et
- un pont supérieur (31 ; 1031 ; 2031) reliant les parois latérales, le pont supérieur (31) comportant une zone médiane (Z31) s'étendant de part et d'autre du plan médian (M), **caractérisée en ce que** dans la zone médiane et sur une portion circonférentielle de la jante (3) supérieure ou égale à 50% de sa circonférence, une épaisseur amincie (E31, E36) du pont supérieur (31) est inférieure à 0.75 mm, de préférence inférieure à 0.65 mm

2. Jante (3 ; 1003 ; 2003) selon la revendication 1, **caractérisée en ce qu'**une largeur (L31) de la zone médiane (Z31) du pont supérieur (31) est supérieure à 10 mm, de préférence supérieure à 16 mm.

3. Jante (3 ; 1003 ; 2003) selon l'une des revendications précédentes, **caractérisée en ce qu'**elle comporte deux gouttières (34A, 34B ; 1034A, 1034B : 2034A, 2034B) situées de part et d'autre du plan médian (M) et aptes à recevoir un talon (6A, 6B) du pneumatique (2) et **en ce qu'**une profondeur maximale (P) des gouttières est inférieure à 7 mm, de préférence inférieure à 5 mm, notamment de l'ordre de 3.5 mm.

4. Jante (3 ; 1003 ; 2003) selon l'une revendications précédentes, **caractérisée en ce que** les parois latérales (33A, 33B) sont prolongées à l'opposé du pont inférieur (38) par des ailes latérales (32A, 32B) qui délimitent chacune un côté d'une gouttière (34A, 34B) de réception d'un talon (6A, 6B) du pneumatique (2) et **en ce qu'**une hauteur (H32) des ailes latérales (32A, 32B), mesurée parallèlement au plan médian (M), est inférieure à 5 mm, de préférence inférieure à 3,6 mm.

5. Jante (3 ; 1003 ; 2003) selon l'une des revendications précédentes, **caractérisée en ce que** la jante est fabriquée à partir d'un alliage d'aluminium comportant au moins 0,6% de Magnésium et 0,6% de Silicium.

6. Jante (3 ; 1003 ; 2003) selon l'une des revendications précédentes, **caractérisée en ce que** l'épaisseur du pont supérieur (31 ; 1031 ; 2031) n'est pas amincie au moins au niveau de zones (Z5) d'attache de rayons (5), situées respectivement autour de trous (35) où sont montés les rayons (5) et **en ce qu'**une longueur (L5) de chaque zone d'attache (Z5), mesurée le long de la circonférence de la jante (3), est comprise entre 5 et 30 mm, de préférence comprise entre 10 et 20 mm.

7. Roue (1) de cycle, **caractérisée en ce qu'**elle comprend un pneumatique ouvert (2) et une jante (3) selon l'une des revendications précédentes.

8. Procédé de fabrication d'une jante (3) selon l'une des revendications 1 à 6, **caractérisé en ce qu'**il comprend successivement :
- une étape d'extrusion, dans laquelle on réalise par extrusion ou filage d'un alliage métallique un profilé rectiligne (3'),
- une étape de cintrage, dans laquelle on cintre le profilé (3') pour former au moins une spire hélicoïdale,
- une étape optionnelle de découpe, dans laquelle on sectionne les spires pour obtenir des anneaux,
- une étape d'assemblage, dans laquelle on met bout à bout les extrémités de l'anneau pour les solidariser,
- une étape d'amincissement, dans laquelle on enlève de la matière au pont supérieur (31 ; 1031 ; 2031), sur toute la zone médiane (Z31), afin de conférer au pont supérieur son épaisseur amincie (E31, E36).

9. Procédé selon la revendication 8, **caractérisé en ce que** lors de l'étape d'amincissement, la matière est enlevée en une seule passe.

10. Procédé selon la revendication 9, **caractérisé en ce que** lors de l'étape d'amincissement, on utilise un procédé de fraisage.
